# EUROPÄISCHE PATENTANMELDUNG

(11) **EP 0 567 763 A1**
(43) Veröffentlichungstag der Anmeldung: **03.11.1993**
(21) Anmeldenummer: 93104474.7
(22) Anmeldetag: 18.03.1993
(51) Int. Cl.: H04L 25/30, H04L 7/033

(54) **Verfahren und Anordnung zur Regeneration eines Ternärsignals**

(30) Priorität: 27.04.1992 DE 4213801
(71) Anmelder: SIEMENS AKTIENGESELLSCHAFT, D-80333 München (DE)
(72) Erfinder: Sedlmayr, Johannes, Dipl.-Ing. (FH), W-8912 Kaufering (DE)

(57) **Zusammenfassung**

Bei einer analog arbeitenden Regenerationsanordnung für Ternärsignale treten Qualitätseinbußen bei unterschiedlichen Signalamplituden, bei Bauteiletoleranzen und Offset-Verschiebungen auf.

Deshalb soll ein Verfahren zur Regeneration von Ternärsignalen und eine hierzu geeignete Anordnung geschaffen werden.

Bei der Erfindung werden die abgetasteten Ternärwerte (+1, 0, -1) mit Hilfe von zwei Schwellwerten ermittelt und getrennten Integrationseinrichtungen (4, 7; 5, 8 und 6, 9) zugeführt. Der zweiten Integrationseinrichtung werden die Abtastwerte (S) zumindest der steilsten Nulldurchgänge zugeführt, aus diesen wird auch ein Steuersignal (SS) für einen Oszillator (14) gewonnen. Durch Differenzbildung der durch die Integrationseinrichtungen gebildeten Mittelwerte (M1, M2, M3) der drei Ternärwerte mit den zugehörigen Ternärwerten entsprechenden Abtastwerten (S₊₁, S₀, S₋₁) werden Differenzwerte (D1, D2 und D3) berechnet, aus deren Beträgen durch weitere Integration ein Gütekriterium (GK) und eine Störmeldung (SM) gewonnen wird.

## Beschreibung

Die Erfindung betrifft ein Verfahren zur Regeneration eines Ternärsignals nach dem Oberbegriff des Patentanspruchs 1 und eine Anordnung zur Durchführung des Verfahrens nach dem Oberbegriff des unabhängigen Patentanspruchs 7.

Zur gleichstromfreien Übertragung werden Binärsignale in Ternärsignale umgesetzt. Diese werden beispielsweise als drei verschiedene Spannungswerte übertragen. Empfangsseitig ist eine Regeneration des übertragenen Ternärsignals erforderlich. Aus dem Ternärsignal wird ein üblicherweise zur Abtastung verwendetes Taktsignal in einer Phasenregelschleife wiedergewonnen. Das Regelkriterium wird aus den Nulldurchgängen des Ternärsignals abgeleitet. Durch Exemplarstreuung der Bauelemente, beispielsweise durch Temperaturbedingte Offset-Spannungen, wird eine optimale Auswertung des Signals verhindert. Ebenso verhindern unterschiedliche Amplituden des Empfangssignals, bedingt durch unterschiedliche Übertragungsbedingungen oder Exemplarstreuungen eines vorgeschalteten Demodulators, eine optimale Wiedergewinnung des Ternär- und damit des ursprünglichen Binärsignals.

Es soll daher ein Verfahren zur Rückgewinnung des Taktsignals und zur optimalen Regeneration des Empfangssignals angegeben werden.

Außerdem sollen noch Kriterien gewonnen werden, die die Güte des empfangenen Ternärsignals und Störsignale signalisieren.

Ein erfindungsgemäßes Verfahren ist im Patentanspruch 1 angegeben. Eine Anordnung zur Durchführung des Verfahrens ist in einem unabhängigen Anspruch angegeben.

Vorteilhafte Weiterbildungen der Erfindung sind den Unteransprüchen zu entnehmen.

Der besondere Vorteil der Erfindung besteht darin, daß eine rein digitale Verarbeitung des empfangenen Ternärsignals erfolgt. Fehler durch Offset-Spannungen werden durch die digitale Verarbeitung ausgeglichen und ausgeregelt, so daß stets ein Abtasttakt ohne Phasenfehler erzeugt wird.

Durch die digitale Auswertung der Amplituden der Ternärwerte (in der Regel Spannungswerte) werden außerdem die Schwellwerte zur Unterscheidung zwischen den drei Ternärwerten der Amplitude des Signals angepaßt. Die Digitaltechnik ermöglicht außerdem große Zeitkonstanten, so daß das Verfahren auch bei einem durch Rauschen gestörten Signal optimal arbeitet. Auch bei Unsymmetrien des empfangenen Ternärsignals erfolgt eine optimale Regeneration.

Durch Vergleich mit den langfristigen Mittelwerten können Kriterien für die Signalgüte und das Vorhandensein von Störsignalen gewonnen werden.

Das Verfahren kann an die verschiedenen ternären Codierungen angepaßt werden.

Eine Anordnung zur Durchführung des Verfahrens wird zweckmäßigerweise in integrierter Schaltkreistechnik realisiert. In den Schaltungsdetails sind zahlreiche Variationen möglich.

Ein Ausführungsbeispiel der Erfindung wird anhand von Figuren näher erläutert.

Es zeigen:
- Fig. 1: ein Prinzipschaltbild,
- Fig. 2: ein Blockschaltbild und
- Fig. 3: ein Zeitdiagramm.

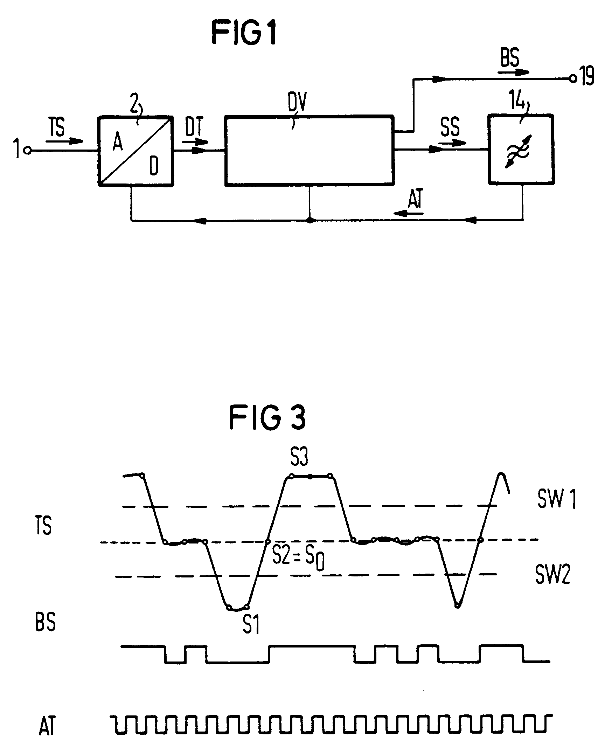

In Figur 1 ist ein Prinzipschaltbild der erfindungsgemäßen Anordnung dargestellt. Dem Signaleingang 1 eines A/D-Umsetzers 2 (Analog/Digital) wird ein empfangenes Ternärsignal TS zugeführt und von diesem in ein digitales Ternärsignal DT umsetzt. Dieses wird in einer digitalen Anordnung DA in ein Binärsignal BS umgesetzt und am Datenausgang 19 abgegeben. Außerdem wird in der digitalen Anordnung DA ein Steuersignal SS erzeugt, daß einen Oszillator 14 steuert, der wiederum ein Abtasttaktsignal AT erzeugt, das dem A/D-Umsetzer 2 und der digitalen Anordnung DA zugeführt wird.

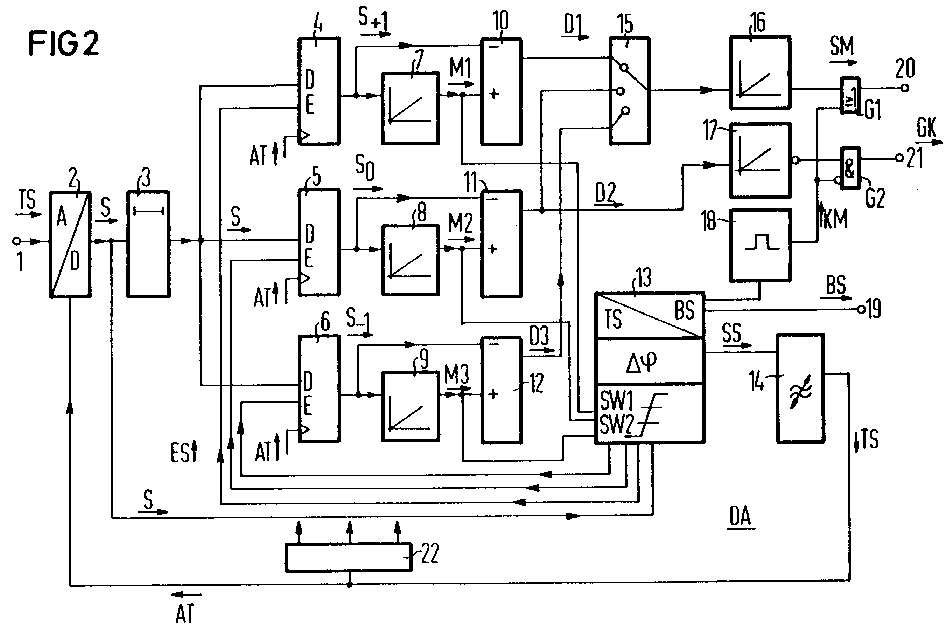

In Figur 2 ist die Anordnung ausführlicher in einem Blockschaltbild dargestellt. Die Anordnung enthält den A/D-Umsetzer 2, dessen Ausgang über ein Verzögerungsglied 3 mit den Eingängen dreier Integrationseinrichtungen 4, 7; 5, 8 und 6, 9 verbunden ist. Jede Integrationseinrichtung enthält einen Integrator 7, 8, 9 mit jeweils einem vorgeschalteten Register 4, 5, 6. Die Ausgänge der Integratoren sind mit einer Steuereinrichtung 13 verbunden. Außerdem sind die Ein- und Ausgänge der Integratoren jeweils mit einem Subtrahierer 10, 11, 12 verbunden. Der Ausgang des zweiten Subtrahierers 11 ist hierbei auf einen weiteren Integrator 17 geführt, an dessen Ausgang 21 ein Gütekriterium GK abgegeben wird. Die Ausgänge aller drei Subtrahierer sind über einen Multiplexer 15 mit einem vierten Integrator 16 verbunden, dessen Ausgang über ein Gatter auf einen Anschluß 20 geführt ist, an dem über ein erstes Gatter G1 eine Störmeldung SM abgegeben wird. Eine an die Steuereinrichtung 13 angeschaltete Signalüberwachung 18 gibt bei Dauerlagen eine Kontrollmeldung KM ab. Diese ist über das erste Gatter G1 mit der Störmeldung und über ein zweites Gatter G2 mit dem Gütekriterium logisch verknüpft. Eine Taktversorgung 22 liefert weitere Betriebstakte für die Empfangsanordnung.

Das empfangene Ternärsignal TS wird mit dem Abtasttaktsignal AT abgetastet und in digitale Abtastwerte S umgesetzt. Der Abtastwert S wird der Steuereinrichtung 13 zugeführt, die aufgrund von zwei Schwellwerten SW1 und SW2 entscheidet, welchem Ternärwert +1, 0 oder -1 er zuzuordnen ist. Die Zuordnung erfolgt durch Zuordnungssignale ES über Enable-Eingänge E der Register 4 bis 6. Handelt es sich um den ersten Ternärwert +1, so wird er in das erste Register 4 eingeschrieben. Handelt es sich um den mittleren Ternärwert 0, so wird er in das zweite Register 5 eingeschrieben und handelt es sich um den dritten Ternärwert -1 so wird er in das dritte Register R6 übernommen. Die Abtastwerte werden als verzögerte Abtastwerte S_{V} mit dem späteren Abtasttakt - bezogen auf das abgetastete Ternärsignal - übernommen. Das Verzögerungsglied 3 hat lediglich die Aufgabe, der Steuereinrichtung genügend Zeit zur Verfügung zu stellen, um einen Vergleich mit den Schwellwerten durchführen zu können und vor allen Dingen zu entscheiden, ob es sich um einen "steilen Nulldurchgang" handelt. Dies wird noch genauer erläutert. Das Verzögerungsglied kann als Register ausgeführt werden.

Die in die Register 4 bis 6 übernommenen ersten bis dritten Ternärwerten zugeordnete Abtastwerte S₊₁, S₀ und S₋₁ werden in den Integratoren 7-9 summiert. Am Ausgang der Integratoren liegen dann die Summen beziehungsweise - bei Fortlassen der niederwertigsten Binärstellen - die Mittelwerte M1 bis M3 an, die der Steuerung zugeführt werden. Dieser stehen damit der Mittelwerte M1 der "maximalen" ersten Ternärwerte +1, der Mittelwert M3 der "minimalen" dritten Ternärwerte -1 und der MIttelwert M2 der "mittleren" zweiten Ternärwerte "0" - genauer die der entsprechenden Abtastwerte S₊₁, S₀, S₋₁-zur Verfügung. Hieraus kann sie die Schwellen SW1 und SW2 ermitteln, die beispielsweise in der Mitte zwischen den Mittelwerten M1 und M2 bzw. M2 und M3 liegen.

Aus dem Vergleich des aktuellen Abtastwertes S₀ mit dem zweiten Mittelwert M2 wird bei Abweichungen ein Steuersignal SS gewonnen, das über einen Tiefpaß den Oszillator 14 steuert. Die Abweichungen der positiven und der negativen Flankendurchgänge werden hierbei jedoch mit unterschiedlichem Vorzeichen bewertet, so daß einer Phasenabweichung zwischen dem empfangenen Ternärsignal TS und dem Abtasttaktsignal AT stets ein gleichgerichtetes Steuersignal SS entspricht.

Anhand von Figur 3 soll dies näher erläutert werden. In der obersten Zeile ist ein speziell codiertes Ternärsignal dargestellt. Bei diesem Signal erfolgt der Übergang vom ersten Ternärwert +1 zu dem dritten Ternärwert -1 stets über den mittleren Ternärwert 0, d.h. auch jeder steile Nulldurchgang entspricht einem mittleren Ternärwert. In die zweite Integrationseinrichtung 5, 8 sollen nur die Abtastwerte S₀, die einem steilen Nulldurchgang entsprechen, übernommen werden. Hierzu ist es erforderlich, daß die Steuereinrichtung 3 aufeinanderfolgende Abtastwerte S1, S2 und S3 bewertet. Nur wenn der erste dieser drei Abtastwerte S1 und der dritte Abtastwert S3 unterschiedlichen Extremwerten, den Ternärwerten +1 und -1 entsprechen, dann liegt der mittlere Abtastwert S2 im Bereich eines steilen Nulldurchgangs und wird folglich auch in die zweite Integrationseinrichtung 5, 8 übernommen.

Die Mittelwertbildung von M2 erfolgt also in diesem Ausführungsbeispiel nur von den Abtastwerten der steilen Nulldurchgänge; eine zusätzliche Mittelwertbildung aus allen Ternärwerten "0" ist nicht notwendig. Bei einer vereinfachten Version können auch sämtliche Abtastwerte, die dem mittleren Ternärwert "0" zugeordnet werden, der zweiten Integrationseinrichtung zugeführt werden. Man erhält so auch bei kürzerer Integrationszeit einen genauen Wert durch die Mittelwertbildung.

Aus den vorstehenden Betrachtungen kann gefolgert werden, daß der zweite Mittelwert M2 bei einer vereinfachten Ausführung auch durch Mittelung der beiden den extremen Ternärwerten +1, -1 zugeordneten Mittelwerten M1 und M3 gewonnen werden kann. Bei unsymmetrischen Ternärsignalen, die Ternärwerte +1 und -1 weisen unterschiedliche Amplituden auf, ist dann aber die Abtastung nicht mehr optimal. Das Steuersignal SS kann natürlich auch von einer Differenz D2 am Ausgang des zweiten Subtrahierers 11 gewonnen werden.

Bei der positiven Flanke wird eine Abweichung eines Abtastwertes S₀ direkt als Steuersignal SS verwendet, bzw. das Vorzeichen der Abweichung; bei einer negativen Flanke wird das Vorzeichen der Abweichung invertiert. Natürlich kann dem Oszillator 14 auch noch ein digitaler Tiefpaß vorgeschaltet sein.

Bei anders codierten Ternärsignalen, beispielsweise dem AM-Signal, treten die steilen Nulldurchgänge zwischen den eigentlichen Abtastwerten auf. In diesem Fall werden in die zweite Integrationseinrichtung 5, 8 die Flankendurchgänge entsprechenden Abtastwerte eingeschrieben. Für die mittleren Ternärwerte kann zwar eine weitere Integrationseinrichtung zur Ermittlung der mittleren Ternärwerte vorgesehen werden; diese ist im allgemeinen jedoch nicht nötig, da die Nulldurchgänge diesen entsprechen. Der A/D-Umsetzer 2 muß dann mit einem Abtastaktsignal der doppelten Übertragungsrate betrieben werden.

In der zweiten Integrationsvorrichtung 5, 8 wird nicht nur der Mittelwert M2 für die mittleren Ternärwerte "0" bestimmt, sie ist auch vorteilhaft für die Gewinnung des Gütekriteriums GK. Zunächst wird die Differenz D2 zwischen dem zweiten Mittelwert M2 und dem aktuellen Abtastwert S₀ eines steilen Nulldurchganges (oder auch aller mittlerer Ternärwerte "0") gebildet. Diese Differenz wird dem weiteren Integrator 17 zugeführt und unter Fortlassung des Vorzeichens summiert. Die Differenz D2 gibt hierbei die Abweichung des Abtastwertes vom Idealwert an. Übersteigt die Summe der Differenzen D2 bei einer vorgegebenen Anzahl von Abtastwerten einen Summenwert, so kann ein Signal ausgegeben werden, das auf eine verminderte Güte des empfangenen Signals hinweist. Liegt die Summe jedoch unterhalb dieses Schwellwertes, so kann das hierzu antivalente Gütekriterium GK angezeigt werden. Ebenso besteht die Möglichkeit verschiedene Gütestufen zu signalisieren. Selbstverständlich kann der Differenzwert D2 auch vorher mit einem mittleren Schwellwert verglichen werden und das Ergebnis im Integrator 17 addiert oder subtrahiert werden.

Die Zuverlässigkeit des Gütekriteriums GK, das die Summe der Verzerrungen der Nulldurchgänge - Jitter genannt - angibt, steigt mit der Anzahl der bewerteten Abtastwerte S₀ bzw. der Differenzwerte D2. Die Erkennung eines Störsignals soll jedoch häufig innerhalb kürzerer Zeit erfolgen. Zu diesem Zweck werden die Differenzwerte D1 und D3 in derselben Weise in der ersten Integrationseinrichtung 4, 7 und der dritten Integrationseinrichtung 6, 9 gebildet und über den Multiplexer 15 dem vierten Integrator 16 zugeführt. Da die steilen Nulldurchgänge nur ca. 1/8 (von der Codierung abhängig) der übertragenen Ternärwerte haben, kann die Integrationszeit wesentlich verringert werden. Die Erkennungszeit für einen Störer liegt bei ca. 200 Abtastwerten. Wird eine Störung erkannt, so können die Integratoren gegen eine Einspeicherung weiterer Abtastwerte gesperrt werden.

Die Signalüberwachung 18 gibt dann eine Kontrollmeldung KM ab, wenn keine Schrittumschläge erfolgen. Dies kann aufgrund eines Störers oder eines fehlenden Eingangssignals erfolgen. Je nach Codierungsart kann das Ternärsignal oder auch das Binärsignal BS überwacht werden. Die Steuereinrichtung 13 weist natürlich auch eine Decodiereinrichtung auf, die das Ternärsignal wieder in das ursprüngliche Binärsignal BS umsetzt. Diese ist jedoch nicht Teil der Erfindung.

## Patentansprüche

1. Verfahren zur Regeneration eines Ternärsignals (TS),
**dadurch gekennzeichnet**,
daß das Ternärsignal (TS) abgetastet und in digitale Abtastwerte (S) umgesetzt wird,
daß Mittelwerte (M1, M2, M3) für die Ternärwerte (+1, 0, -1) ermittelt werden,
daß aufgrund dieser Mittelwerte (M1, M2, M3) zwei Schwellwerte (SW1, SW2) ermittelt werden, die zwischen einem ersten Ternärwert (+1) und einem zweiten mittleren Ternärwert beziehungsweise zwischen einem dritten Ternärwert (-1) und dem mittleren Ternärwert (0) liegen,
daß eine Zuordnung eines Abtastwertes (S_{V}) zu einem Ternärwert (+1, 0, -1) aufgrund eines Vergleichs mit diesen Schwellwerten (SW1, SW2) erfolgt,
daß eine Abtastung zum Zeitpunkt von steilen Nulldurchgänge (S2) des Ternärsignals (TS) erfolgt und
daß aus diesen Abtastwerten (S₀) ein Steuersignal (SS) zur Steuerung eines Abtasttaktsignals (AT) ermittelt wird.

2. Verfahren nach Anspruch 1,
**dadurch gekennzeichnet**,
daß die Abweichungen der Abtastwerte (S₀) bei den steilen Nulldurchgängen von den hieraus gewonnenen zweiten Mittelwerten (M2) die Phase des Abtastsignals (AT) steuern.

3. Verfahren nach Anspruch 1 oder 2,
**dadurch gekennzeichnet**,
daß aus den Abweichungen zwischen dem zweiten Mittelwert (M2) und den Abtastwerten (S₀) der Nulldurchgänge zweite Differenzwerte (D2) gebildet werden,
daß die Differenzwerte betragsmäßig integriert werden und daß am Ende einer Integrationsperiode die Summe als Gütekriterium (GK) signalisiert wird.

4. Verfahren nach einem der vorhergehenden Ansprüche,
**dadurch gekennzeichnet**,
daß zusätzlich die Differenzwerte (D1, D3) zwischen den extremen Ternärwerten (+1, -1) entsprechenden Abtastwerten (S₊₁, S₋₁) und den hieraus gewonnenen ersten und dritten Mittelwerten (M1, M3) gebildet werden und
daß die Beträge der Differenzwerte (D1, D2, D3) integriert werden und
daß am Ende einer Integrationsperiode die Summe aller Differenzwerte (D1, D2, D3) als Störmeldung (SM) signalisiert wird.

5. Verfahren nach Anspruch 3 oder 4,
**dadurch gekennzeichnet**,
daß jeweils nur bei Über- oder Unterschreiten eines vorgegebenen Summenwertes ein Gütekriterium (GK) bzw. eine Störmeldung (SM) signalisiert wird.

6. Verfahren nach einem der vorhergehenden Ansprüche,
**dadurch gekennzeichnet**,
daß das empfangene Ternärsignal (TS) oder/und das decodierte Binärsignal (BS) auf Dauerlagen hin überwacht wird.

7. Anordnung zur Regeneration eines Ternärsignals (TS),
**dadurch gekennzeichnet**,
daß ein A/D-Umsetzer (2) vorgesehen ist,
dessen Signaleingang (1) das Ternärsignal (TS) zugeführt wird und mit einem Abtasttaktsignal (AT) abgetastet wird,
daß der Ausgang des A/D-Umsetzers (2) über ein Verzögerungsglied (3) auf die Dateneingänge dreier Integrationseinrichtungen (4, 7; 5, 8; 6, 9) geführt ist,
daß eine Steuereinrichtung (13) vorgesehen ist, der die Abtastwerte (S) vom Ausgang des A/D-Umsetzers (2) zugeführt werden und deren weiteren Eingänge mit den Ausgängen der Integrationseinrichtungen (4, 10; 5, 11; 8, 12) verbunden sind,
daß die Steuereinrichtung (13) Mittel zum Vergleich der Amplitude eines Abtastwertes (S) mit zwei Schwellwerten (SW1, SW2) aufweist,
daß die Steuereinrichtung (13) Mittel zur Erzeugung von Zuordnungssignalen (ES) aufweist, die jeweils einen verzögerten Abtastwert S_{V}) eine der Integrationseinrichtungen (4, 7; 5, 8; 6, 9) zuordnen und
daß die Steuereinrichtung (13) Mittel aufweist, um auf den Abtastwerten (S₀) der steilen Nulldurchgänge ein Steuersignal (SS) für einen Oszillator (14) zu ermitteln, der das Abtasttaktsignal (AT) erzeugt.

8. Anordnung nach Anspruch 7,
**dadurch gekennzeichnet**,
daß ein zweiter Subtrahierer (11) vorgesehen ist, dessen Eingängen der Abtastwert (S₀) eines steilen Nulldurchgangs und der von der zweiten Integrationseinrichtung (5, 8) errechnete zweite Mittelwerte (M2) zugeführt wird, so daß ein zweiter Differenzwert (D2) gebildet wird, und
daß ein weiterer Integrator (17) vorgesehen ist, dem diese zweiten Differenzwerte (D2) zur Ermittlung eines Gütekriteriums (GK) zugeführt werden.

9. Anordnung nach Anspruch 8,
**dadurch gekennzeichnet**,
daß weitere Subtrahierer (10, 12) vorgesehen sind, die entsprechende Differenzwerte (D1, D3) für die extremen Ternärwerte (+1, -1) ermitteln, und
daß ein vierter Integrator (15) vorgesehen ist, dem alle Differenzwerte (D1, D2, D3) zur Ermittlung einer Störmeldung (SM) zugeführt werden.

10. Anordnung nach Anspruch 8 oder 9,
**dadurch gekennzeichnet**,
daß eine Signalüberwachung (18) vorgesehen ist, die das Vorhandensein von Dauerlagen des Ternärsignals (TS) oder/und des dekodierten Binärsignals (BS) überprüft.

11. Anordnung nach Anspruch 10,
**dadurch gekennzeichnet**,
daß logische Verknüpfungsglieder (G1, G2) vorgesehen sind, die ein von der Signalüberwachung (18) abgegebenes Ausgangssignal mit der Störmeldung (SM) oder/und dem Gütekriterium (GK) verknüpfen.
